# EUROPEAN PATENT SPECIFICATION

(11) **EP 3 162 414 B1**
(45) Date of publication and mention of the grant of the patent: **22.07.2020**
(21) Application number: 15192303.4
(22) Date of filing: 30.10.2015
(51) Int. Cl.: A63B 45/02, B29C 65/08, B29D 22/04, B29C 65/00, B32B 37/06, B29C 44/56

(54) **METHOD FOR PRODUCING A THERMOPLASTIC POLYURETHANE BALL TEXTURE**
VERFAHREN ZUR HERSTELLUNG EINER THERMOPLASTISCHEN POLYURETHANKUGELTEXTUR
PROCÉDÉ DE PRODUCTION D'UNE TEXTURE POLYURÉTHANE THERMOPLASTIQUE POUR UNE BALLE

(43) Date of publication of application: 03.05.2017
(73) Proprietor: DingZing Advanced Materials Inc., Kaohsiung 812 (TW)
(72) Inventor: LIN, Keng-Hsien, 812 Kaohsiung (TW)
(74) Representative: Spengler, Robert

(56) References cited:
- EP-A2- 2 193 908
- US-A- 2 280 314
- US-A1- 2008 064 540
- US-A1- 2012 142 465

## Description

### BACKGROUND OF THE INVENTION

### 1. Field of the Invention

The present invention relates to a method for producing a thermoplastic polyurethane ball texture.

### 2. Description of the Related Art

Nowadays most people live life on the go, doing different types of exercise to maintain health and fitness, and by doing so maintain or enhance their body function and immunity. Those exercises include running, ball sports, swimming etc..., and among them, basketball, volleyball, tennis and badminton are the most popular, compared to other exercises. These sports are easy to learn and suitable for any age, and additionally can be enjoyed with friends. Also, as these exercises are not limited to indoor or outdoor venues, they are perfect for daily fitness and recreation.

Taking basketball for example, it is selected based upon different venue requirements and situations based upon the basketball specifications, venue and degree of competition. In recent years, considering the weight and sizes for different ages, basketball has become much more sophisticated, and its specifications can be classified by ages: below 8 years old, below 11 years old, above 12 years and women of all ages, to improve safety.

Basketball venue can be divided into three categories: for indoor, outdoor and indoor/outdoor usage. The indoor venues are mostly wooden surfaces suitable for intense competition, and so the basketballs for indoor usage need to be made of leather or high-quality synthetic leather (such as microfiber, ZK), and the feel, durability and strength of these textures can endure intense competition. Outdoor venues include asphalt, cement or coarse surfaces, which significantly wear down the basketball, and so basketballs for outdoor usage are made of rubber and combine different percentages of rubber based upon the degree of competition to offer players the best in durability and feel.

Indoor/outdoor venues are PU surfaces suitable for any surface, and the materials are selected from average synthetic leather, PU, PVC, and ZK. Based upon gender, age, type of surface and degree of competition, a suitable basketball can be picked out.

Please refer to FIG. 1, which concerns Taiwan Invention Patent No. 200750, entitled "Method for producing basketballs", which includes the following steps: in step 11, a ball-shaped inner tube layer is provided after inflation; in step 12, a winding layer is formed on the exterior of the inflated inner tube layer; in step 13, a rubber layer and a PU layer are respectively provided; in step 14, the rubber layer is combined with the PU layer and is cut into plural sheets in predetermined shapes; in step 15, the plural sheets are combined on the exterior of the winding layer to form a ball; in step 16, the ball body is heated and vulcanized.

Through the above steps, the inner tube layer, the winding layer, the rubber layer and the PU layer are combined together and processed at the same time. This can simplify the processes, save time and reduce costs. Moreover, the PU layer has been vulcanized, so it can enhance the durability of the basketball surface. The space between the PU layer and the rubber layer is vulcanized, and so the two layers can be more compact to enhance stability and usage durability.

However, certain problems exist in the above method for producing basketballs:

### 1. Wasting energy

In the prior art, the space between PU layer and the rubber layer is vulcanized, so that the two layers can be more compact to enhance stability and usage durability, and the vulcanization time is determined by factors including the type of glue, vulcanization temperature and product thickness. However, the glue in the prior art cannot shorten vulcanization time, and so it neither shortens the processes, nor saves on energy, and additionally, no environmentally friendly energy-saving effects can be obtained.

### 2. No economic benefits

The basketball produced by the prior art is made of PU which is mostly molded by casting, which leads to waste (such as flash, and scrap) produced during the PU production processes; NG waste, and final waste product cannot be reused, but can only be recycled by way of recycling stations. Hence, no economic benefits can be obtained.

### 3. Low efficiency

The rubber layer and PU layer are adhered together by way of an adhesive, laminated by mechanical methods, and cut into the plural sheets. Each sheet is combined with the exterior of the winding layer by way of an adhesive, and a groove is formed between two adjacent sheets. Finally, the plural rubber strips are combined with the groove of vulcanized ball material to form a three-dimensional shape. Such complicated production processes not only cost time, but also increase costs. Therefore, no improvements in efficiency are obtained.

### (Clean copy)

The above disadvantages express the problems of the current method for producing basketballs. Therefore, it is desirable to provide a method to improve upon the above disadvantages. EP2193908A2 discloses a method for producing a thermoplastic polyurethane ball texture.

### SUMMARY OF EMBODIMENTS OF THE INVENTION

Therefore, an objective of an embodiment of the present invention is to provide a method for producing a thermoplastic polyurethane ball texture comprising a heating and foaming step (900), an extruding step (902), a roll pressing step (903), an embossing step (906), a cutting step (907), a welding step (908) and a carving step (909).

First, in a heating and foaming step (900), a thermoplastic polyurethane is foamed by way of an added vesicant. Then, in an extruding step (902), the thermoplastic polyurethane is extruded to provide a thermoplastic forming material. Next, in the roll pressing step (903), the thermoplastic forming material is roll pressed to provide an intermediate unfinished sheet. Then, in an embossing step (906), the surface of the unfinished sheet is embossed for the printing of predetermined drawings to provide an embossed sheet. Next, in a cutting step (907), the embossed sheet is cut into predetermined lengths to provide plural connecting sheets. Then, in a welding step (908), the partial overlapping region of two adjacent connecting sheets is welded by way of ultrasonic welding to provide a connected exterior. Finally, in a carving step (909), at least one groove is carved out in ultrasonic cutting of the predetermined drawings surface of the connected exterior to provide a ball texture.

Another technique of an embodiment of the present invention is that the thermoplastic polyurethane ball texture production method further includes a first coloring step (901) which occurs between the heating and foaming step (900) and the extruding step (902). In the first coloring step (901), a pigment is added into the thermoplastic polyurethane to change the color of the thermoplastic polyurethane.

Another technique of an embodiment of the present invention is that the thermoplastic polyurethane ball texture production method further includes a heating step (910) which occurs between the extruding step (902) and the roll pressing step (903). In the heating step (910), the thermoplastic forming material is softened by heating.

Another technique of an embodiment of the present invention is that the thermoplastic polyurethane ball texture production method further includes a second coloring step (911) which occurs after the roll pressing step (903). In the second coloring step (911), the surface of the unfinished sheet is colored with a predetermined color.

Another technique of an embodiment of the present invention is that the thermoplastic polyurethane ball texture production method includes a laminating step (904) which occurs between the roll pressing step (903) and the embossing step (906). In the laminating step (904), the two unfinished sheets are laminated and ultrasonically welded to provide a double-layer sheet.

Another technique of an embodiment of the present invention is that the thermoplastic polyurethane ball texture production method includes a flattening step (905) which occurs between the laminating step (904) and the embossing step (906). In the flattening step (905), the double-layer sheet is flattened to provide an intermediate double-layer unfinished sheet.

An advantage of embodiments of the invention is that the ball texture made of the thermoplastic foaming material is not similar to rubber or PU, which needs a vulcanization process, and so it can shorten the processes, enhance efficiency and save energy. Moreover, the thermoplastic foaming material is biodegradable, so it can reduce environmental pollution. Through ultrasonic welding, the drying time for adhering two adjacent connecting sheets by way of an adhesive is reduced and the processing time is shortened, improving efficiency.

### BRIEF DESCRIPTION OF THE DRAWINGS

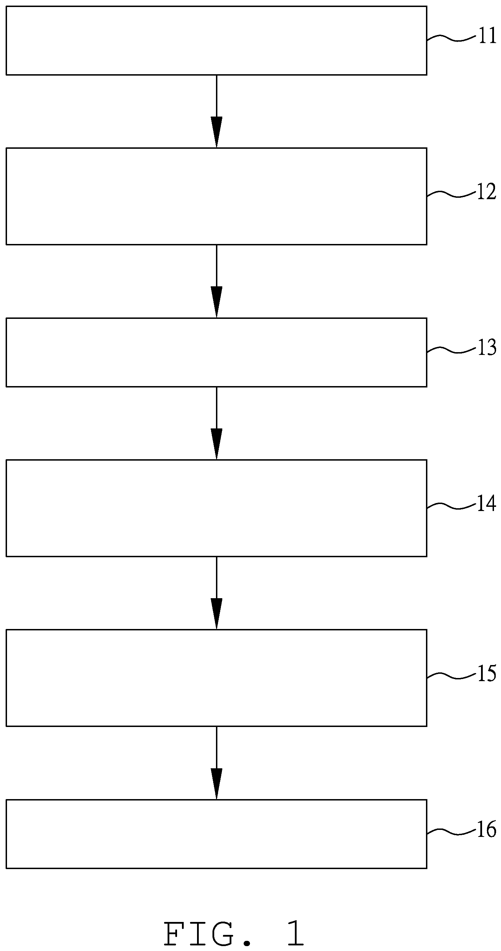

FIG. 1 is a flowchart of a prior art method disclosed in Taiwan Invention Patent No. 200750, showing a method for producing basketballs;
FIG. 2 is a cross-sectional view depicting a thermoplastic
   polyurethane ball texture produced according to an embodiment of the present invention;
FIG. 3 is a 3-dimensional view depicting the appearance of a basketball made from a thermoplastic polyurethane ball texture;
FIG. 4 is a flowchart depicting a first embodiment method according to the present invention;
FIG. 5 is a flowchart depicting a second embodiment method according to the present invention;

### DETAILED DESCRIPTION OF THE PREFERRED EMBODIMENTS

Specific structural and functional details disclosed herein will become apparent from the following descriptions of the two preferred embodiments of the present invention taken in conjunction with the accompanying drawings.

Before explaining the present method in detail, it is to be understood that similar elements are labeled with the same reference numbers.

Particularly, in the preferred embodiments, the ball texture is applied to produce basketballs, but it will be appreciated that various embodiment methods may be applicable to other balls, such as volleyballs, dodge balls, etc., and so it shall not be construed as limiting the invention. The structure of an embodiment basketball, from inside to outside, includes an inner bladder, a wrapping yarn, a middle bladder, a foaming layer and a surface, but the present method is for producing a basketball surface material, and so other parts involved in the present method are not described herein.

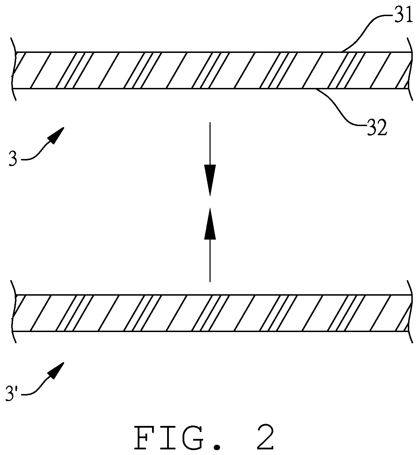

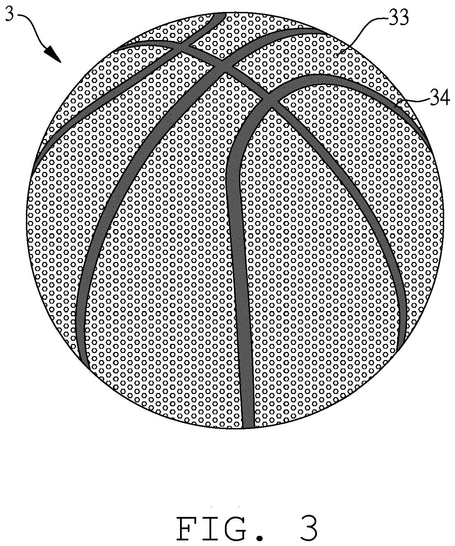

With reference to FIGs. 2 and 3, an embodiment of the present disclosure provides a thermoplastic polyurethane ball texture which comprises a thermoplastic foaming material 3. The thickness of thermoplastic foaming material 3 is between 2 and 6 mm, and its density is between 0.2 g/cm³ and 0.8 g/cm³.

The thermoplastic foaming material 3 provides the physical function of vulcanized rubber and processing function of a soft plastic, unlike rubber or PU which needs a vulcanization process, producing the final product by way of a simple plastic processing machine. Therefore, it can shorten the processes, enhance efficiency and save energy. Moreover, the waste produced during the production processes can be reused directly, and so it can reduce environmental pollution and achieve recycling goals. Further, the thermoplastic foaming material 3 provides good air permeability, water resistance and transparency, and is also biodegradable, thus reducing environmental pollution.

The thermoplastic foaming material 3 comprises a first surface 31, a second surface 32 opposite the first surface, an embossment 33 formed on the first surface 31 and at least one groove 34 carved out of the embossment 33.

It is advantageous that the thermoplastic polyurethane ball texture further includes another thermoplastic foaming material 3', and the two thermoplastic foaming materials 3, 3' are laminated in a vertical direction, so that two of their surfaces touch together and are ultrasonically welded together.

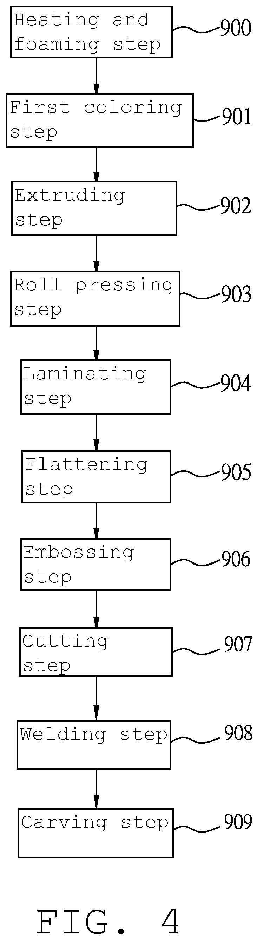

With reference to FIG. 4, a first embodiment method according to the present invention is depicted, and the embodiment is a preparing method for the foregoing texture which comprises a heating and foaming step 900, a first coloring step 901, an extruding step 902, a roll pressing step 903, a laminating step 904, a flattening step 905, an embossing step 906, a cutting step 907, a welding step 908 and a carving step 909.

First, in the heating and foaming step 900, the thermoplastic polyurethane is foamed by way of an added vesicant.

In the first embodiment, the thermoplastic polyurethane is selected from a set consisting of polypropylene, high-density polyethylene, low-density polyethylene, linear low-density polyethylene and combinations of thereof. Based upon different requirements, different thermoplastic polyurethane materials can be selected, and so the above materials shall not be construed as limiting the invention.

Before the heating and foaming step 900 is performed, the thermoplastic polyurethane is dried out by a dryer, so that excess moisture is vaporized to prevent materials from being impacted by surface bubbles in subsequent processes, and the defect rate is thereby reduced.

Next, in the first coloring step 901, based upon different requirements for the ball texture, a pigment is added into the thermoplastic polyurethane to change the color of the thermoplastic polyurethane.

Then, in the extruding step 902, the thermoplastic polyurethane is extruded to provide a thermoplastic forming material 3. The thermoplastic polyurethane is poured into the entrance of an extruder, and is extruded from an exit of the extruder to provide the thermoplastic forming material 3.

Then, in the roll pressing step 903, the thermoplastic forming material 3 is roll pressed to provide an intermediate unfinished sheet. In the roll pressing step 903, the extruded thermoplastic forming material 3 is roll pressed by two opposing rollers, so that unequal thickness issues are reduced for the subsequent processes.

Then, in the laminating step 904, the two unfinished sheets are laminated and ultrasonically welded to provide a double-layer sheet.

Then, in the flattening step 905, the double-layer sheet is flattened to provide an intermediate double-layer unfinished sheet.

Particularly, when an unfinished sheet is not thick enough to meet the user's requirements, the laminating step 904 and the flattening step 905 can be performed to provide an enhanced and intermediate double-layer unfinished sheet. Otherwise, the forgoing two steps can be skipped based upon the user's requirement, and shall not be construed as limiting the invention.

Then, in the embossing step 906, the surface of the unfinished sheet is embossed for printing the predetermined drawings 33 to provide an embossed sheet. In the first embodiment, the plural granular surfaces are printed onto the surface of the unfinished sheet by rollers with a granular surface, so it can increase the friction of the basketball having such a ball texture to enhance ball handling control. The roller for embossment can be changed based upon user requirements.

Then, in the cutting step 907, the embossed sheet is cut into predetermined lengths by a cutter to provide plural connecting sheets.

Then, in the welding step 908, the partial overlapping region of two adjacent connecting sheets is ultrasonically welded together to provide a connected exterior. Through ultrasonic welding, the drying time for adhering two adjacent connecting sheets by way of an adhesive is reduced to shorten the process times and enhance efficiency.

Finally, in the carving step 909, at least one groove 34 is ultrasonically cut in the predetermined drawing surface of the exterior to provide a ball texture.

The thermoplastic polyurethane ball texture has perfect resilience and wear-resistance, so it is usable not only in indoor and outdoor venues, but also provides players the best in feel and durability.

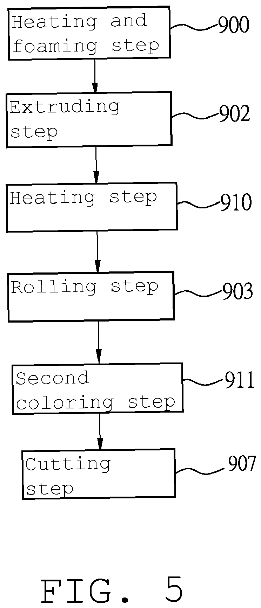

With reference to FIG. 5, a second embodiment method according to the present invention is depicted. Because the second embodiment is similar to the first, common features are not described again. A difference is that the first coloring step 901, the laminating step 904, the flattening step 905, the embossing step 906, the welding step 908 and the carving step 909 are skipped, and a heating step 910 and a second coloring step are added.

Particularly, the second embodiment is to deliver the thermoplastic foaming material 3 to the factory for processing, so it can satisfy the requirements of diverse product lines.

The heating step 910 occurs between the extruding step 902 and the roll pressing step 903. In the heating step 910, the thermoplastic foaming material 3 is soften by heating.

The second coloring step 911 occurs between the roll pressing step 903 and the cutting step 907. In the second coloring step 911, the surface of the thermoplastic foaming material 3 is colored with a predetermined color. Through the heating step 910 and the second coloring step 911, the users can produce different thicknesses and colors of ball textures.

Finally, the thermoplastic foaming material 3 is cut by the cutter, and meanwhile, a roller can be additionally installed by which the thermoplastic foaming material 3 is rolled up for delivery to factory.

With the aforementioned descriptions, the following benefits of the present method can be obtained:

### 1. Environmentally friendly energy-saving effects

The thermoplastic foaming material 3 is not similar to rubber or PU which needs a vulcanization process, so it can shorten the processing times, enhance efficiency and save energy. Moreover, the thermoplastic foaming material 3 is biodegradable, so it can reduce environmental pollution.

### 2. Economic benefits

Waste of thermoplastic foaming material 3 produced during the production processes can be reused directly to reduce environmental pollution and achieve recycling goals.

### 3. High efficiency

Through ultrasonic welding, the drying time for adhering two adjacent connecting sheets by way of an adhesive is reduced to shorten the processing times and enhance efficiency.

Consequently, the present invention, through a series of steps, from the heating and foaming step, the coloring step, the extruding step, the roll pressing step, the laminating step, the flattening step, the embossing step, the cutting step, the welding step to the carving step, provides a ball texture. It can save on delivery times to achieve coherent processes, save time and costs, and also enhances competitive advantages.

The foregoing detailed description is merely in relation to two preferred embodiments and shall not be construed as limiting the invention. It is to be understood that many other possible modifications and variations can be made without departing from the scope of the invention as hereinafter claimed.

## Claims

1. A method for producing a thermoplastic polyurethane ball texture, the method comprising:
a heating and foaming step (900), in which a thermoplastic polyurethane is foamed by way of an added vesicant;
an extruding step (902), in which the thermoplastic polyurethane is extruded to provide a thermoplastic forming material;
a roll pressing step (903), in which the thermoplastic forming material is roll pressed to provide an intermediate unfinished sheet;
an embossing step (906), in which a surface of the unfinished sheet is embossed for printing a predetermined drawing to provide an embossed sheet;
a cutting step (907), in which the embossed sheet is cut into predetermined lengths to provide plural connecting sheets;
a welding step (908), in which the partial overlapping region of two adjacent connecting sheets is ultrasonically welded together to provide a connected exterior; and
a carving step (909), in which at least one groove is carved out in ultrasonic cutting of the predetermined drawing surface of the exterior to provide a ball texture.

2. The method of claim 1, wherein the method further comprises a first coloring step (901) which occurs between the heating and foaming step (900) and the extruding step (902), wherein in the first coloring step (901) a pigment is added into the thermoplastic polyurethane to change a color of thermoplastic polyurethane.

3. The method of claim 1, wherein the method further comprises a heating step (910) which occurs between the extruding step (902) and the roll pressing step (903), wherein in the heating step (910) the thermoplastic forming material is softened by heating.

4. The method of claim 3, wherein the method further comprises a second coloring step (911) which occurs after the roll pressing step (903), wherein in the second coloring step (911) the surface of the unfinished sheet is colored with a predetermined color,

5. The method of claim 2, wherein the method further comprises a laminating step (904) which occurs between the roll pressing step (903) and the embossing step (906), wherein in the laminating step (904) two unfinished sheets are laminated and ultrasonically welded to provide a double-layer sheet.

6. The method of claim 5, wherein the method further comprises a flattening step (905) which occurs between the laminating step (904) and the embossing step (906), wherein in the flattening step (905) the double-layer sheet is flattened to provide an intermediate double-layer unfinished sheet.

## Patentansprüche

1. Verfahren zur Erzeugung einer Textur bei einem thermoplastischen Polyurethanball, wobei das Verfahren umfasst:
einen Heiz- und Schäumschritt (900), bei dem ein thermoplastisches Polyurethan mittels eines hinzugegebenen Zugpflasters geschäumt wird,
einen Extrusionsschritt (902), bei dem das thermoplastische Polyurethan extrudiert wird, um einen thermoplastischen Formstoff zu ergeben,
einen Walzpressschritt (903), bei dem der thermoplastische Formstoff walzgepresst wird, um einen unfertigen Bogen als Zwischenprodukt zu ergeben,
einen Prägungsschritt (906) bei dem die Oberfläche des unfertigen Bogens geprägt wird, um eine vorgegebene Zeichnung zu drucken, um einen geprägten Bogen zu ergeben,
einen Schneideschritt (907), bei dem der geprägte Bogen in vorgegebene Längen geschnitten wird, um mehrere Anschlussbögen zu ergeben,
einen Schweißschritt (908), bei dem der sich teilweise überlappende Bereich von zwei angrenzenden Anschlussbögen mit Ultraschall verschweißt wird, um eine verbundene Außenseite zu ergeben, und
einen Schnitzschritt (909), bei dem mindestens eine Nut durch Ultraschallschneiden der vorgegebenen Zeichnungsfläche der Außenseite ausgeschnitzt wird, um eine Balltextur zu ergeben.

2. Verfahren nach Anspruch 1, wobei das Verfahren ferner einen ersten Färbungsschritt (901) umfasst, der zwischen dem Heiz- und Schäumschritt (900) und dem Extrusionsschritt (902) stattfindet, wobei beim ersten Färbungsschritt (901) ein Pigment dem thermoplastischen Polyurethan hinzugegeben wird, um eine Farbe des thermoplastischen Polyurethans zu ändern.

3. Verfahren nach Anspruch 1, wobei das Verfahren ferner einen Heizschritt (910) umfasst, der zwischen dem Extrusionsschritt (902) und dem Walzpressschritt (903) stattfindet, wobei beim Heizschritt (910) der thermoplastische Formstoff durch Heizen aufgeweicht wird.

4. Verfahren nach Anspruch 3, wobei das Verfahren ferner einen zweiten Färbungsschritt (911) umfasst, der nach dem Walzpressschritt (903) stattfindet, wobei beim zweiten Färbungsschritt (911) die Oberfläche des unfertigen Bogens mit einer vorgegebenen Farbe gefärbt wird.

5. Verfahren nach Anspruch 2, wobei das Verfahren ferner einen Laminierschritt (904) umfasst, der zwischen dem Walzpressschritt (903) und dem Prägungsschritt (906) stattfindet, wobei beim Laminierschritt (904) zwei unfertige Bögen laminiert und mit Ultraschall verschweißt werden, um einen doppelschichtigen Bogen zu ergeben.

6. Verfahren nach Anspruch 5, wobei das Verfahren ferner einen Verflachungsschritt (905) umfasst, der zwischen dem Laminierschritt (904) und dem Prägungsschritt (906) stattfindet, wobei beim Verflachungsschritt (905) der doppelschichtige Bogen verflacht wird, um als Zwischenprodukt einen unfertigen doppelschichtigen Bogen zu ergeben.

## Revendications

1. Procédé de production d'une texture de bille de polyuréthane thermoplastique, le procédé comprenant :
une étape de chauffage et de moussage (900), dans laquelle un polyuréthane thermoplastique est amené à mousser au moyen d'un vésicant ajouté ;
une étape d'extrusion (902), dans laquelle le polyuréthane thermoplastique est extrudé pour produire un matériau de formation de thermoplastique ;
une étape de pressage au rouleau (903), dans laquelle le matériau de formation de thermoplastique est pressé au rouleau pour produire une feuille non finie intermédiaire ;
une étape de gaufrage (906), dans laquelle une surface de la feuille non finie est gaufrée pour impression d'un dessin prédéterminé pour produire une feuille gaufrée ;
une étape de coupe (907), dans laquelle la feuille gaufrée est découpée en longueurs prédéterminées pour produire une pluralité de feuilles liées ;
une étape de soudage (908), dans laquelle la région de chevauchement partiel de deux feuilles liées adjacentes est soudée conjointement par ultrasons pour produire un extérieur lié ; et
une étape de gravure (909), dans laquelle au moins une rainure est gravée dans la coupe par ultrasons de surface du dessin prédéterminé de l'extérieur pour produire une texture de bille.

2. Procédé selon la revendication 1, le procédé comprenant en outre une première étape de coloration (901) qui est conduite entre l'étape de chauffage et de moussage (900) et l'étape d'extrusion (902), dans lequel, dans la première étape de coloration (901), un pigment est ajouté dans le polyuréthane thermoplastique pour modifier une couleur du polyuréthane thermoplastique.

3. Procédé selon la revendication 1, le procédé comprenant en outre une étape de chauffage (910) qui est conduite entre l'étape d'extrusion (902) et l'étape de pressage au rouleau (903), dans lequel, dans l'étape de chauffage (910), le matériau de formation de thermoplastique est ramolli par chauffage.

4. Procédé selon la revendication 3, le procédé comprenant en outre une deuxième étape de coloration (911) qui est conduite après l'étape de pressage au rouleau (903), dans lequel, dans la deuxième étape de coloration (911), la surface de la feuille non finie est colorée avec une couleur prédéterminée.

5. Procédé selon la revendication 2, le procédé comprenant en outre une étape de stratification (904) qui est conduite entre l'étape de pressage au rouleau (903) et l'étape de gaufrage (906), dans lequel, dans l'étape de laminage (904), deux feuilles non finies sont stratifiées et soudées par ultrasons pour produire une feuille à double couche.

6. Procédé selon la revendication 5, le procédé comprenant en outre une étape d'aplanissement (905) qui est conduite entre l'étape de stratification (904) et l'étape de gaufrage (906), dans lequel, dans l'étape d'aplanissement (905), la feuille à double couche est aplanie pour produire une feuille non finie à double couche intermédiaire.
